# EUROPÄISCHE PATENTSCHRIFT

(11) **EP 1 393 940 B1**
(45) Veröffentlichungstag und Bekanntmachung des Hinweises auf die Patenterteilung: **09.08.2006**
(21) Anmeldenummer: 03024629.2
(22) Anmeldetag: 01.02.2001
(51) Int. Cl.: B60J 1/20, B60J 3/02

(54) **Seitenfensterrollo**
Roller blind for side windows
Store à enrouleur pour vitres latérales

(30) Priorität: 09.02.2000 DE 10005970
(43) Veröffentlichungstag der Anmeldung: 03.03.2004
(62) Teilanmeldung aus: 01102306.6
(73) Patentinhaber: BOS GmbH & Co. KG, 73760 Ostfildern (DE)
(72) Erfinder: Schlecht, Werner, 71665 Vaihingen/Enz-Aurich (DE); Seel, Holger, 71134 Aidlingen (DE); Walter, Herbert, 73061 Ebersbach (DE)
(74) Vertreter: Rüger, Barthelt & Abel Patentanwälte

(56) Entgegenhaltungen:
- DE-A- 19 728 908
- DE-A- 19 826 537
- DE-U- 9 416 744
- DE-U- 29 900 548
- FR-A- 2 774 947
- US-A- 4 758 041

## Beschreibung

Für die hintere Heckscheibe von PKW sind eine Vielzahl von Lösungen bekannt, um ein dort befindliches Fensterrollo elektrisch fernbedient aus- und einzufahren.

Eine Lösung ist beispielsweise in EP-C-0 240 747 gezeigt, bei der zum Aufspannen lediglich biegesteife Hebel verwendet werden. Das bekannte Heckscheibenrollo weist einen Sockel auf, in dem eine Wickelwelle drehbar gelagert ist. Die Wickelwelle ist mit Hilfe eines Federmotors in Aufwickelrichtung einer Rollobahn vorgespannt, die an der Wickelwelle mit einer Kante angebracht ist. Die andere Kante ist mit einer Zugstange verbunden, an der zwei einarmige Hebel angreifen, die an dem Sockel gelagert sind. Die Lagerachsen der Hebel verlaufen rechtwinkelig zu der Wickelwelle. Beim Aufrichten der Hebel wird die Rollobahn von der Wickelwelle abgezogen.

Sonnenlicht tritt bei PKWs jedoch nicht nur durch die Heckscheibe ein, sondern auch durch die Seitenscheiben, wobei die Fondpassagiere dem über die Seitenscheiben hereinfallende Licht im allgemeinen noch häufiger ausgesetzt sind, weil die Fensterkante keine ausreichenden Schatten wirft, da die Fensterkanten der Seitenscheiben den Fondpassagieren unmittelbar benachbart ist.

Es besteht deswegen ein Bedarf an einem einfach zu bedienenden Rollo für die Seitenfenster, insbesondere für die hinteren Seitenfenster.

Allerdings ist das Seitenfensterrollo hinsichtlich seiner mechanischen Gestaltung wesentlich komplizierter als ein Heckscheibenrollo, bei dem die Rollobahn im allgemeinen eine symmetrischen, trapezförmigen oder rechteckigen Zuschnitt hat. Für die Seitenfenster können solche einfachen Zuschnitte nicht verwendet werden, da die Kontur des Seitenfensters relativ kompliziert ist und zweckmäßigerweise die gesamte Fensterfläche abgeschattet werden soll.

Die US 4 758 041 zeigt ein weiteres Heckscheibenrollo. Das Heckscheibenrollo weist wiederum eine Wickelwelle auf, an der mit einer Kante eine Rollobahn befestigt ist. Die andere Kante der Rollobahn ist mit einem Auszugsprofil oder Spriegel versehen, der endseitig in Führungsschienen geführt ist. Die Wickelwelle wird mit Hilfe eines Elektromotors im Sinne des Auf- oder Abwickelns der Rollobahn in Gang gesetzt. Um die Rollobahn in ihrer Betriebsstellung gespannt zu halten, greift an jedem Ende des Auszugsprofils jeweils eine Zugfeder an. Die Zugfeder verläuft in der Führungsschiene zu deren von der Wickelwelle abliegenden Ende. An diesem Ende befindet sich ein Umlenkstück, durch das die Zugfeder hindurch führt, um im weiteren Verlauf parallel zur Führungsschiene zu liegen.

Ausgehend hiervon ist es Aufgabe der Erfindung ein elektrisch bedienbares Seitenfensterrollo zu schaffen, das einfacher klapperfrei zu bekommen ist.

Bei dem erfindungsgemäßen Seitenfensterrollo ist eine drehbar gelagerte Wickelwelle vorgesehen, an der mit einem Randabschnitt der Zuschnitt der Rollobahn befestigt ist. An einem von diesem Abschnitt anderen abliegenden Abschnitt der Rollobahn greift ein Betätigungselement in Gestalt eines Seils an, um die Rollobahn von der Wickelwelle abzuziehen und im aufgespannten Zustand zu halten. Zum Ein- und Ausfahren der Rollobahn werden kraftbetätigte Antriebsmittel in Form eines Elektromotors verwendet.

Der Elektromotor wirkt mit der Wickelwelle zusammen, während die Federmittel jeweils am anderen Ende der Rollobahn angreifen. Wenn der Elektromotor mit der Wickelwelle unmittelbar getrieblich verbunden ist, ist derjenige Teil der Rollobahn, der den größten Weg zurücklegt, über die Betätigungsmittel in Gestalt von Seilen mit einer Zugfeder verbunden. Dies gestattet unter anderem auch auf einfache Weise, unterschiedliche Laufwege der Betätigungsmittel auszugleichen, wenn beispielsweise ein Betätigungsmittel in einer Geraden und das andere in einer gekrümmten Führungsschiene läuft.

Auf diese Weise kann beispielsweise von der Fahrerseite her, das betreffende Seitenfensterrollo gesteuert werden. Auch die Fondpassagiere haben eine einfache Möglichkeit das Seitenfensterrollo auf und ab zubewegen. Darüber hinaus gestattet die neue Konstruktion das Seitenfensterrollo weitgehend innerhalb der Tür bzw. hinter der Türverkleidung verschwinden zu lassen. Im eingefahrenen Zustand ist es dann praktisch vollständig hinter die Umrisse des Fensters zurückgezogen. Es stehen keine Teile wie Grifflaschen und dergleichen vor, die sonst für handbediente Seitenfensterrollos erforderlich wären.

Die Wickelwelle kann je nach den Platzverhältnissen und der besonderen Karosserieform vertikal, beispielsweise in der B-Säule, im Türrahmenprofil in der Nähe der B-Säule eines PKW oder parallel zur Unterkante des Seitenfensters angeordnet sein. Diese beiden Kanten sind unabhängig von der Karosserieform, im allgemein weitgehend gerade, während andere Kanten des Fensters abhängig von der Karosserieform mehr oder weniger stark gekrümmt sind, was eine Unterbringung der Wickelwelle erschwert.

Die Anbringung der Wickelwelle unterhalb der unteren Fensterrahmenkante gestattet es darüber hinaus, die Wickelwelle in jenem Bereich der Tür unterzubringen, der bei heutigen Fahrzeugen ohnehin viel leeres Volumen innerhalb der Tür bereitstellt.

Um die Rollobahn im aufgespannten Zustand flatter- und schwingungsfrei zu halten und auch während der Ausfahrbewegung zu führen, kommen grundsätzlich zwei Lösungen in Frage:

Die eine Lösung sieht wenigstens eine Führungsschiene vor, die parallel zu einem Rand des Fensters verläuft. Mit Hilfe dieser Führungsschiene wird ein, von der Wickelwelle abliegender Abschnitt der Rollobahn gefesselt geführt.

Die andere Möglichkeit besteht darin, als Betätigungsmittel im Wesentlichen beigesteife Schubglieder zu verwenden, um die Rollobahn von der Wickelwelle abzuziehen. Die Schubglieder greifen an derjenigen Kante der Rollobahn an, die beim Ein- und Ausfahren den größten Weg zurücklegt. Dabei wird zumindest während des Abwickelvorgangs die Vorderkante der Rollobahn ausschließlich durch die Schubglieder geführt und in Querrichtung gehalten. Die Schubglieder müssen deswegen zumindest in Richtung senkrecht zu einer Ebene, die von der aufgespannten Rollobahn definiert ist, hinreichend beigesteif sein. In Richtung parallel dazu wird die Führung weitgehend durch die Rollobahn selbst in Verbindung mit der Vorspannung erbracht, weshalb in dieser Richtung eine besondere Biegesteifigkeit nicht unbedingt erforderlich ist.

Im vollständig aufgespannten Zustand kann die Oberkante des Rollobahnzuschnittes in hakenförmigen Taschen aufgenommen sein. Diese verhindern, Schwingungen der Oberkante der aufgespannten Rollobahn durch die Fahrzeugerschütterungen. Solche Schwingungen lassen sich auch weitgehend vermeiden, wenn die Schubglieder derart gerichtet sind, dass die Oberkante der Rollobahn beim Ausfahren auf der Innenseite der Scheibe entlang gleitet, weil sie an die Scheibe angedrückt wird.

Eine sehr stabile Führung der Rollobahn ergibt sich, wenn die Rollobahn zwischen zwei Führungsschienen geführt wird, die ausgehend von der Wickelwelle etwa in die gleiche Richtung verlaufen. Da diese Führungsschienen wegen der Seitenfenstergeometrie nicht zueinander parallel verlaufen, enthält die Rollobahn zumindest einen Spriegel, der längenverstellbar ist. Er passt sich damit selbstätig dem sich verändernden Abstand zwischen den Führungsschienen an.

Die Ober- oder Seitenkante der Rollobahn kann auch an einem Arm aufgenommen sein, der an einem in der Führungsschiene laufenden Schlitten befestigt ist. Der Arm verläuft parallel zu dem betreffenden Rand des Fensters und führt die jeweilige Kante der Rollobahn praktisch über ihre gesamte Länge.

Verspannungen in der Rollobahn lassen sich vermeiden, wenn der Arm als Schiene ausgebildet ist, in der die betreffende Rollobahnkante verschieblich aufgenommen ist.

Um die Betätigung und Steuerung der Rollobahn möglichst einfach zu gestalten, umfassen die Antriebsmittel des erfindungsgemäßen Seitenrollos wenigstens einen Elektromotor sowie Federmittel. Zwischen dem Elektromotor und den Federmitteln liegt kinematisch die Rollobahn, wobei der Antriebsmotor die Position der Ober- oder Seitenkante der Rollobahn definiert, während die Federmittel als "Slave-Antrieb" für die Vorspannung in der Rollobahn sorgen.

Die Betätigungsmittel können je nach Einbauverhältnissen als Schubglieder oder als Zugglieder wirken. In beiden Fällen können Bowdenzüge verwendet werden, wobei im Falle der Druckglieder die Seele des Bowdenzugs entsprechend drucksteif ausgeführt bzw. geführt sein muss.

Im übrigen sind Weiterbildungen der Erfindung Gegenstand von Unteransprüchen.

In der Zeichnung sind Ausführungsbeispiele des Gegenstandes der Erfindung dargestellt. Es zeigen:
Fig. 1 den Fondbereich einer Limousine, mit Blick auf die Innenseite der hinteren, rechten Tür, in einer aufgebrochenen perspektivischen Darstellung,
Fig. 2 die hintere, rechte Seitentür nach Fig. 1, in einer teilweise aufgebrochenen Darstellung,
Fig. 3 wesentliche Funktionsteile des Seitenrollos gemäß Fig. 2, in einer perspektivischen, schematischen Darstellung,
Fig. 4 ein Ausführungsbeispiel des erfindungsgemäßen Seitenrollos mit zwei Führungsschienen in einer schematisierten Darstellung,
Fig. 5 den Spriegel und dessen Aufnahme in den Führungsschienen in einer schematisierten Darstellung mit aufgeschnittenen Führungsschienen,
Fig. 6 ein Ausführungsbeispiel ähnlich dem nach Fig. 5, jedoch mit vertikal angeordneter Wickelwelle,

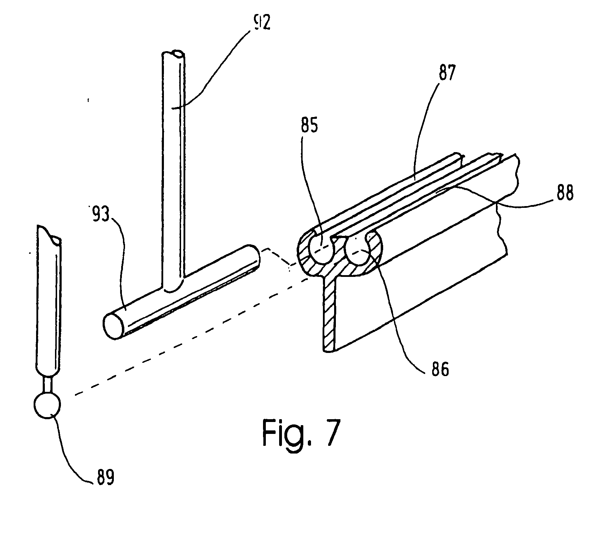

Fig. 7 die untere Führungsschiene des Ausführungsbeispiels nach Fig. 7 in einer abgebrochenen, schematisierten Perspektivdarstellung,
Fig. 8 ein Ausführungsbeispiel des erfindungsgemäßen Seitenrollos mit einer flexiblen Versteifung einer Rollobahnkante in einer stark schematisierten Darstellung, und
Fig. 9 ein Ausführungsbeispiel ähnlich dem nach Fig. 3, in einer perspektivischen, schematischen Darstellung.

In der nachfolgenden Figurenbeschreibung werden Begriffe wie "vorne", "hinten", "oben" oder "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicher Weise gebraucht werden.

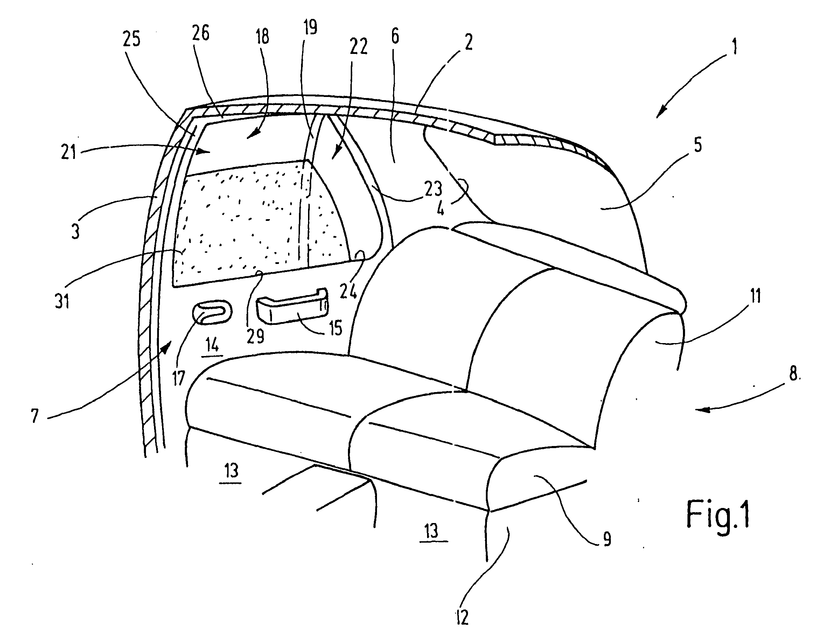

Fig. 1 stellt den aufgebrochenen, abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, so sind beispielsweise Karosserie Innenstrukturen, wie Versteifungen und Befestigungsmittel nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in eine Heckfensteröffnung 4 über, in der eine Heckscheibe 5 eingesetzt ist. Seitlich endet die Heckscheibenöffnung 4 an einer C-Säule 6, die sich im Abstand zu der B-Säule 3 befindet. Zwischen der B-Säule 3 und der C-Säule 6 ist an der B-Säule 3 eine hintere, reche Seitentür 7 in der bekannten Weise anscharniert.

Auf der Höhe der hinteren, rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Die dem Innenraum zugekehrte Innenseite der Seitentür 7 ist mit einer Innenverkleidung 14 versehen, an der ein Türgriff 15 befestigt ist und in dem eine Betätigungsklinke 17 eingelassen ist, um das Schloss der Seitentür 7 zu öffnen.

Die Seitentür 7 enthält oberhalb der Innenverkleidung 14 eine Fensteröffnung 18, die durch einen Zwischensteg 19 in zwei Abschnitte 21 und 22 aufgeteilt ist. Der Abschnitt 22 hat eine etwa dreieckförmige Gestalt und wird nach vorne von dem Zwischensteg 19 nach hinten durch einen hinteren Rahmenabschnitt 23 der Tür sowie einen unteren Fensterrahmenabschnitt 24 begrenzt. In dem Seitenfensterausschnitt 22 ist eine Fensterscheibe fest und unbeweglich eingesetzt.

Der Fensteranschnitt 21 hat eine im weitesten Sinne rechteckige Gestalt. Er wird nach vorne durch einen vorderen Rahmenabschnitt 25, nach oben durch einen oberen Rahmenabschnitt 26, nach hinten durch den Zwischensteg 19 und unten durch den bereits erwähnten unteren Fensterrahmenabschnitt 24 begrenzt. Der vordere Rahmenabschnitt 25 sowie der Zwischensteg 19 enthalten in bekannter Weise Führungsschienen, in denen eine Seitenfensterscheibe verschieblich geführt ist. Der Zwischensteg 19, der von dem oberen Rahmenabschnitt 26 bis zu dem unteren Fensterrahmenabschnitt 24 reicht, verläuft deswegen im Wesentlichen parallel zu dem vorderen Rahmenabschnitt 25, zumindest parallel zu der dort vorhanden Führungsschiene.

Die Seitenfensterscheibe ist in der Fig. 1 nicht zu erkennen. Diese Fensterscheibe ist in der bekannten Weise zwischen der äußeren Blechhaut der Seitentür und der inneren Türschale versenkbar. Es sind ihr auch Antriebsmittel zugeordnet, um die Fensterscheibe auf- und ab zu bewegen.

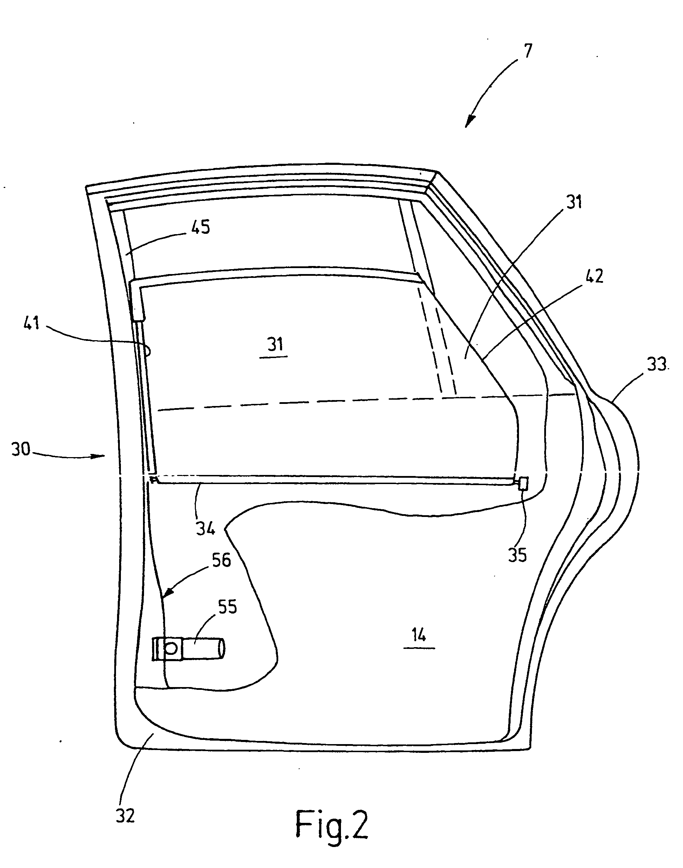

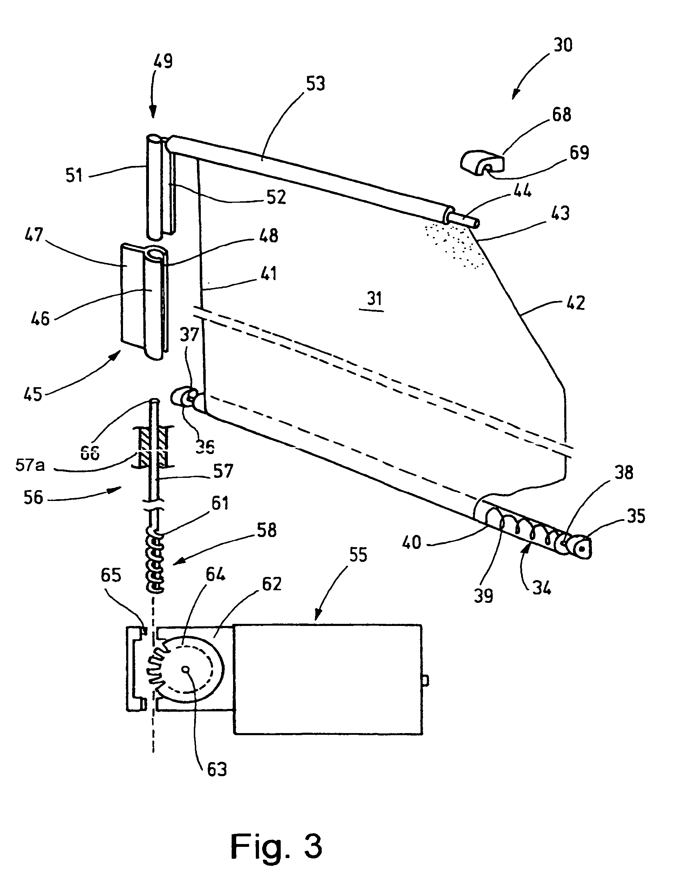

Die Seitentür 7 ist mit einem, in den Figuren 2 und 3 im Einzelnen dargestellten, Seitenfensterrollo 30 versehen, dessen Rollobahn 31 in den Darstellungen der Figuren 1 und 2 teilweise ausgefahren ist, um so den Fondbereich der Fahrgastzelle gegen seitliche Sonneneinstrahlung zu schützen. Die Rollobahn 31 läuft durch einen neben oder unterhalb des unteren Fensterrahmenabschnitts 24 vorhandenen Schlitz 29 heraus, der sich in der Innenverkleidung 14 oder zwischen der Innenverkleidung 14 und der Türinnenschale befindet.

In Fig. 2 ist die Seitentür 7 gesondert veranschaulicht. Es sind in Fig. 2 ein umlaufender Türfalz 32, Abschnitte der aus Blech bestehenden Türaußenhaut 33 sowie die aufgebrochen gezeigte Innenverkleidung 14 zu erkennen, die sich auf der Innenschale der Tür 7 befindet.

Zu dem Seitenfensterrollo 30 gehört eine Wickelwelle 34, die unterhalb der Fensterunterkante 32 hinter der Innenverkleidung 14 auf der Tür 7 gelagert ist. Dazu trägt die Tür 7 im Abstand von einander zwei Lagerböcke 35 und 36 die Lagerzapfen 37 und 38 aufnehmen, die axial aus der rohrförmigen Wickelwelle 34 hervorstehen. In der Wickelwelle 34 befindet sich ein schematisch gezeigter Federmotor 39, der bei 40 mit der Wickelwelle 34 fest verbunden ist und dessen anderes Ende drehfest an den Lagerzapfen 38 angekoppelt ist. Der Lagerzapfen 38 wiederum sitzt drehfest im den Lagerbock 35. Der Federmotor 39 bildet einen Teil der Antriebseinrichtung des Seitenfensterrollos 30 und erzeugt eine Vorspannkraft im Sinnes eines Aufwickeln der Rollobahn 31 auf die Wickelwelle 34. Hierzu ist die Rollobahn 31 an der Wickelwelle 34 beispielsweise mittels eines Keders in bekannter Weise befestigt.

Die Rollobahn 31 besteht aus einem Zuschnitt aus einer Kunststofffolie, die ausreichend das Sonnenlicht abschirmt. Die Außenkontur entspricht der Außenkontur der Fensteröffnung 18, d.h. der Summe der beiden Fensteröffnungen 21 und 22.

Die Rollobahn 31 wird von einer in Fahrtrichtung liegenden vorderen geraden Kante 41, einer hinteren konturierten Kante 42 sowie einer oberen Kante 43 und einer an der Wickelwelle 34 befestigten, nicht erkennbaren Kante, begrenzt.

An der oberen Kante 43 ist eine beispielsweise aus einem Kunststoffprofil bestehende Randverstärkungsleiste 44 angebracht, die von der Hinterkante 42 bis zu der Vorderkante 41 reicht.

Zu dem Seitenfensterrollo 30 gehört ferner eine Führungsschiene 45, die an der Tür 7 im Bereich des vorderen Fensterrahmenabschnittes 25 befestigt ist und von dem oberen Fensterrahmenabschnitt 26 bis in das Innere der Tür 7 reicht.

In Fig. 3 ist lediglich ein Abschnitt zu erkennen. Die Führungsschiene 45 setzt sich aus einem C-förmigen Profil mit einer hintergriffigen Führungsnut 46 und einem angeformten leistenförmigen Befestigungsflansch 47 zusammen. Die Führungsnut 46 öffnet sich an einem Schlitz 48, der dem Flansch 47 gegenüber liegt und von dem Flansch 47 weg zeigt.

In der Führungsschiene 45 läuft ein Schlitten 49, bestehend aus einem im Querschnitt an den Innenraum der Führungsnut 46 angebrachten Grundkörper 51, von dem ein leistenförmiger Flansch 52 ausgeht, der durch den Schlitz 48 nach außen ragt. Im einfachsten Falle ist der Grundkörper 51 im Wesentlichen zylindrisch und der Innenraum der Führungsnut 46 der Führungsschiene 45 ebenfalls zylindrisch.

An dem Flansch 52 ist ein Ausleger 53 befestigt, der von dem Grundkörper 51 im Wesentlichen rechtwinkelig weg steht und seinerseits die Form einer Führungsschiene hat, in der die Randverstärkungsleiste 44 längs verschieblich aufgenommen ist. Der Ausleger 53 ist in der Weise gestaltet, dass die Randverstärkungsleiste 44 lediglich einen Freiheitsgrad hat, nämlich in Richtung parallel zur Längserstreckung des Auslegers 43. In Richtung senkrecht dazu ist sie in dem Ausleger 53 gefesselt.

Um das Seitenfensterrollo 30 wahlweise ein- und auszufahren, gehört zu der Antriebseinrichtung neben dem Federmotor 39 ein Getriebemotor 55, der über ein Betätigungsglied 56 mit dem Schlitten 49 gekoppelt ist. Das Betätigungsglied 56 wird von einem drucksteifen, linienförmigen Element, beispielsweise einem flexiblen Metall- oder Kunststoffdraht 57, der Seele eines Bowdenzugs oder einer schubsteifgeführten, verseilten Drahtlitze gebildet. Zumindest an dem motorseitigen Ende trägt das Betätigungsglied 56 auf seiner Außenumfangsfläche eine eine Schraube oder Schnecke 58 bildende Drahtwicklung 61, die unverschiebbar mit dem Betätigungsglied 56 verbunden ist. Betätigungsglieder dieser Art sind auch unter der Handelsbezeichnung "SU-flexwelle" verfügbar und werden unter anderem bei Fensterhebern eingesetzt.

Der Antriebsmotor 55 ist ein permanent erregter Gleichstrommotor, dem ein Untersetzungsgetriebe 62 nachgeordnet ist. Auf einer Ausgangswelle 63 des Getriebes 62 sitzt drehfest ein Stirnzahnrad 64, dessen Teilung mit der Teilung der Schnecke oder Schraube 58 übereinstimmt.

Neben dem Stirnzahnrad 64 befindet sich in dem Gehäuse des Getriebes 62 eine Führung 65, die derart gestaltet ist, dass sie die Schraube 58 des Betätigungsgliedes 56 tangential zu dem Ausgangszahnrad 64 führt und erzwingt, dass die Zähne des Stirnzahnrades 64 formschlüssig zwischen den Windungen der Schraube 58 eingreifen können.

Das Betätigungsglied 56 verbindet das Stirnzahnrad 64 getrieblich mit dem Schlitten 51, und zwar wird es ausgehend von dem Getriebe 62 bzw. der dort vorhanden Führung 65 drucksteif in einer Hülle 57a bis zum unteren Ende der Führungsschiene 45 geführt. An dieser Stelle tritt das Betätigungsglied 56 in den Innenraum der Führungsnut 46 ein. Das freie Ende 66 des Betätigungsgliedes 56 liegt frei ansto-ßend am unteren Ende des Führungsschlittens 51 an.

Im eingebauten Zustand sind bei geöffnetem Seitenfensterrollo 30 praktisch keine Teile von diesem zu erkennen. Die Führungsschiene 45 verläuft neben der Fensterführung und verschwindet somit weitgehend in der Fensterrahmenverkleidung der Tür 7. Lediglich der Ausleger 53 wäre in einem Schlitz 29 zu erkennen, der einerseits von der Innenverkleidung 14 und andererseits von dem unteren Fensterrahmenabschnitt 24 begrenzt ist und durch den aus dem Türinneren das Seitenfensterrollo 30 ausgefahren wird.

Die Handhabung und Funktionsweise des beschrieben Seitenfensterrollos ist wie folgt:

Im Ruhezustand ist die Rollobahn 31 unter der Wirkung des Federmotors 38 auf die Wickelwelle 34 aufgewickelt. Der Schlitten 51 ist in der Führungsschiene 45 nach unten gefahren, soweit bis der Ausleger 53 den zuvor erwähnten Rolloschlitz 29 entsprechend der Länge des Auslegers 43 ausfüllt.

Wenn der Benutzer ausgehend von dieser Betriebsstellung das Seitenfensterrollo 30 ausfahren will, setzt er über einen nicht weiter gezeigten elektrischen Schalter den Antriebsmotor 55 in Gang und zwar in einer solchen Drehrichtung, dass das Stirnzahnrad 64 das drucksteife bzw. drucksteif geführte Betätigungsglied 56 in Richtung auf die Führungsschiene 45 vorschiebt. Bei dieser Vorschubbewegung drückt das in dem Innenraum der Führungsschiene 45 geführte Betätigungsglied 56 den Führungsschlitten 49 zusammen mit dem daran befestigten Ausleger 53 nach oben in Richtung auf den oberen Fensterrahmenabschnitt 26. Dabei wird entsprechend Rollobahn 31 von der Wickelwelle 34 abgewickelt und durch den Rolloschlitz 29 in der Tür 7 nach oben herausgezogen.

Sobald der Schlitten 49 am oberen Ende der Führungsschiene 45 angekommen ist und an entsprechende Begrenzungsanschläge anstößt, steigt der Motorstrom an, was in bekannter Weise von einer an sich bekannten Überwachungsschaltung ausgewertet wird, um unabhängig von der Schaltersteuerung durch den Benutzer den Antriebsmotor 55 stromlos zu schalten. Die Anordnung sorgt in bekannter Weise ferner dafür, ein Wiedereinschalten des Motorstroms nur für die umgekehrte Drehrichtung zuzulassen.

Die Rollobahn 31 ist nunmehr vollständig ausgefahren und der Ausleger 53 stößt an der oberen Fensterrahmenkante 26 an. Vor der gesamten Fensterfläche ist die Rollobahn 31 aufgespannt.

Selbst wenn der Winkel zwischen der Führungsschiene 45 und der Achse der Wickelwelle 34 nicht 90°beträgt, können in der Rollobahn 31 keine Verspannungen auftreten, weil die Randverstärkungsleiste 44 sich in dem Ausleger 53 zumindest ein Stück weit längsverschieblich bewegen kann.

Ein Schwingen des Auslegers 53 läßt sich bei ausgefahrenem Seitenfensterrollo 30 vermeiden, wenn entsprechend der oberen Endstellung an der Innenseite der Tür 7 eine hakenförmige Tasche 68 befestigt wird, die ein nach unten offene Nut 69 enthält. Die Nut 69 nimmt in der oberen Endstellung den Ausleger 43 an einer Stelle auf, die von dem Schlitten 51 beabstandet ist. Pendelbewegungen des Auslegers 53 um die Längsachse des Schlittens 49 sind dadurch mit Sicherheit ausgeschlossen.

Zum Einfahren des Seitenfensterrollos 30 setzt der Benutzer den Elektromotor 55 über einen entsprechenden Schalter in der entgegengesetzten Drehrichtung in Funktion. Das Stirnzahnrad 54, das mit der Schraube 58 kämmt, zieht das Betätigungsglied 56 nach unten aus der Führungsschiene 45 zurück, wodurch die gegen den Schlitten 49 wirkende Vorschubkraft nachlässt. Der Federmotor 38 ist dadurch in der Lage entsprechend dem Zurückweichen des Betätigungsgliedes 56 die Rollobahn 31 wieder auf die Wickelwelle 34 aufzuwickeln.

Die untere Endstellung des Betätigungsgliedes kann in ähnlicher weise abgefragt werden, wie die obere Endstellung, und in entsprechender Weise stillgesetzt werden.

Ersichtlicherweise wird die Rollobahn 31 durch die Wirkung des Federmotors 38 gespannt gehalten, während die Position durch den selbsthemmend wirkenden Antriebsmotor 55 vorgegeben wird.

Erfindungsgemäß tauschen jedoch der Federantrieb 39 und der Antriebsmotor 55 die Plätze, in der Weise, dass der Antriebsmotor 55 die Wickelwelle 34 formschlüssig antreibt, während das Betätigungsglied 56 durch eine Druckfeder beaufschlagt oder eine solche ersetzt wird. Bei einer derartigen erfindungsgemäßen Ausführungsform wird der Schlitten 51 in Abwickelrichtung vorgespannt, während die Rollobahn 31 gegen die Wirkung der Feder auf der Wickelwelle 38 aufgewickelt wird.

Es wäre schließlich auch denkbar, als Betätigungsglied 56 ein Seil zu verwenden, das einends an dem Schlitten 49 befestigt ist und anderenends an einer Zugfeder. Die Zugfeder würde über das Seil ebenfalls bestrebt sein, den Schlitten 49 nach oben zu ziehen, wobei die Bewegung durch das Zusammenspiel der Wickelwelle 34 mit dem Antriebsmotor 55 gehemmt bzw. freigegeben würde.

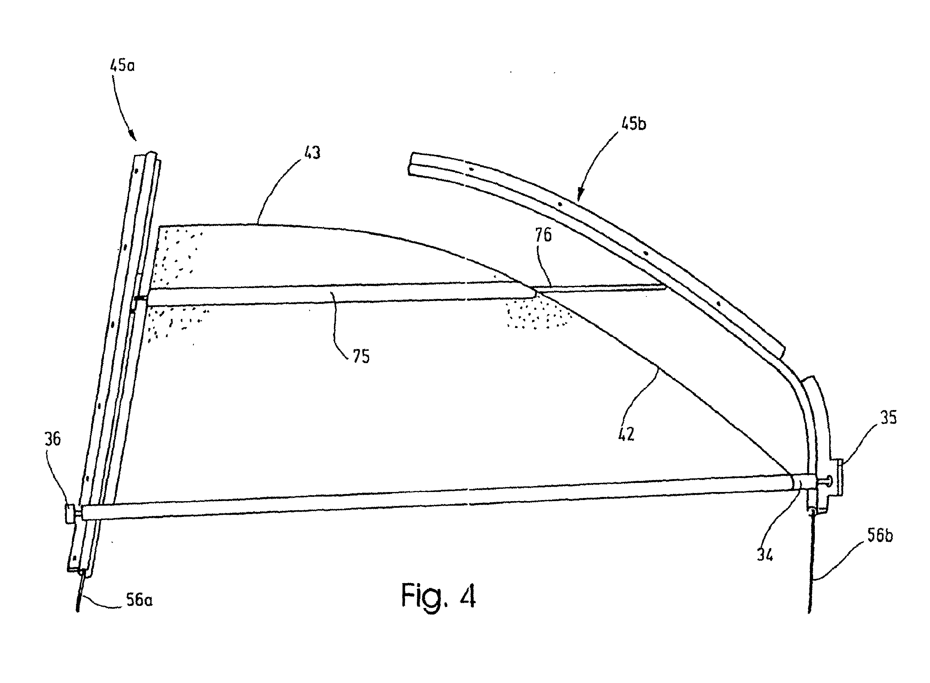

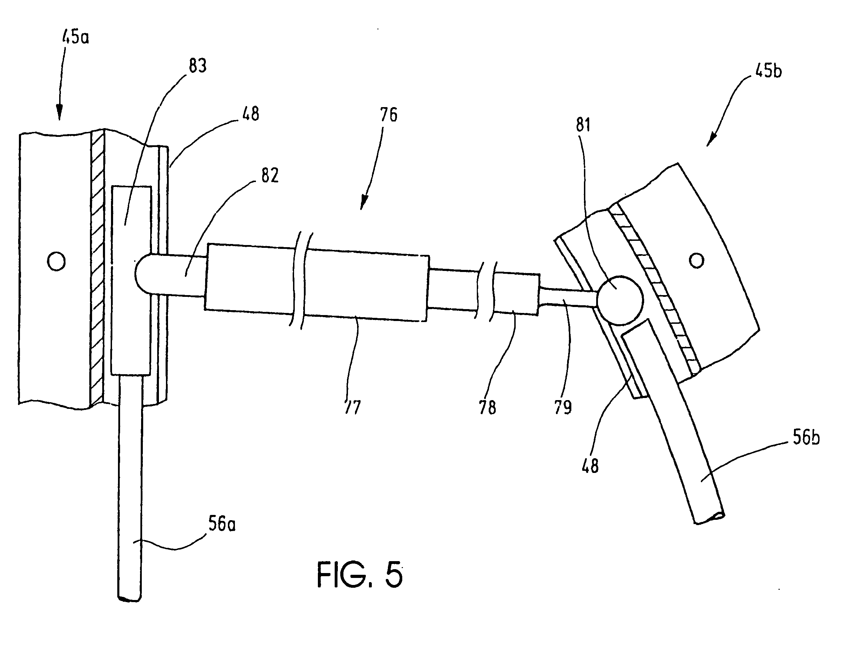

In den Figuren 4 und 5 ist ein Ausführungsbeispiel für ein Seitenfensterrollo 30 veranschaulicht, das zwei Führungsschienen 45a und 45b aufweist. Die Führungsschienen 45a und 45b haben dieselbe Querschnittsgestalt, wie dies im Zusammenhang mit Fig. 3 ausführlich erläutert ist. Die Führungsschiene 45a verläuft im Wesentlichen gerade entsprechend dem Verlauf der vorderen Fensterrahmenkante 25, während die hinter Führungsschiene 45b stark in Richtung auf die Führungsschiene 45a gekrümmt ausgerichtet ist. Derartige Konturen treten beispielsweise bei Coupés auf.

Um zwischen diesen beiden Führungsschienen 45a und 45b einwandfrei die Rollobahn 31 zu führen, enthält die Rollobahn 31 in der Nähe ihrer oberen Kante 43 eine schlauchförmige Tasche 75, die parallel zu der Wickelwelle 34 liegt. Durch die Tasche 45 führt ein Spriegel 76 hindurch, der im einzelnen in Fig. 5 gezeigt ist, die auch das Zusammenspiel mit den Führungsschienen 45 erkennen läßt.

Der Spriegel 76 setzt sich aus zwei teleskopartig gegeneinander bewegbaren Spriegelstücken 77 und 78 zusammen. Das Spriegelstück 77 ist ein zylindrisches Rohr, in dem das Spriegelstück 78 längsverschieblich geführt ist. An seinem freien Ende geht das Spriegelstück 78 in einen zylindrischen Hals 79 über, der an seinem freien Ende eine Kugel 81 trägt. Die Kugel 81 entspricht in ihrem Durchmesser dem Durchmesser des lichten Innenraums der Führungsnut 46 der Führungsschiene 45b. Sie kann nicht durch den Schlitz 48 heraustreten.

Das linke Ende des Spriegelstücks 77 steckt auf einem zylindrischen Zapfen 82, der von einem geraden zylindrischen Führungsschlitten 83 radial weg steht. Der Führungsschlitten 83 ist in dem lichten Innenraum der Führungsnut 46 der Führungsschiene 45a frei verschieblich, wobei der Zapfen 82 durch den Schlitz 48 nach außen ragt.

In jeder der beiden Führungsschienen 45a und 45b läuft ein Betätigungsglied 56a bzw. 56b, dessen Durchmesser größer ist als die Weite des betreffenden Schlitzes 48, womit das Betätigungsglied 56b gezwungen wird, dem Verlauf der Führungsschiene 45b zu folgen und nicht durch Austreten aus dem Schlitz 48 eine Abkürzung nehmen kann.

Die Wickelwelle 34 und deren Halterung ist wiederum wie bei den zuvor beschriebenen Ausführungsbeispielen gestaltet. Da der Verlauf der Führungsschiene 45b bogenförmig gekrümmt verläuft, steht die Bewegungsgeschwindigkeit des Betätigungsgliedes 56b in keinem konstanten Verhältnis zu der Bewegungsgeschwindigkeit des Betätigungsgliedes 56a.

Zum Ausfahren der Rollobahn 31 werden die beiden Motoren in Gang gesetzt, die daraufhin die ihnen zugeordneten Betätigungsglieder 56a und 56b in den betreffenden Führungsschienen 45a und 45b nach vorne schieben und dadurch sowohl einerseits mit dem Schlitten 83 als auch mit der Kugel 81 stumpf anliegend in Eingriff kommen. Der Spriegel 76 wird ständig parallel zu der Wickelwelle 34 ausgerichtet, von der Wickelwelle 34 weggeschoben.

In der Nähe der Wickelwelle 34 haben die beiden Führungsschienen 45a und 45b den größten Abstand von einander, weshalb der Spriegel 76 entsprechend in die Länge gezogen ist, und aus der schlauchförmigen Tasche 75 vorsteht. Je weiter sich die Rollobahn 31 der ausgezogenen Endlage nähert, umso dichter kommt ihre Hinterkante 42 an die Führungsschiene 45b heran. Der Spriegel 76 verkürzt sich entsprechend. In der Endstellung füllt die Rollobahn 31 den Raum zwischen den Führungsschienen 45a und 45b vollständig aus und schattet somit auch vollständig das betreffende Seitenfenster ab.

Damit der Spriegel 76 auch bei vollständig ausgefahrener Rollobahn 31 noch eine technisch brauchbare Länge hat, ist die Tasche 75 gegenüber der Oberkante 43, wie gezeigt, ein kurzes Stück zurück versetzt. Der Raum oberhalb der schlauchförmigen Tasche 75 kann durch ein entsprechend steifes Formteil der Rollobahn 31 ausgefüllt werden.

Ähnlich wie zuvor erläutert ist die Wickelwelle 34 gegenüber der unteren Fensterkante 24 zurückversetzt, und zwar um jenen Abstand, den die schlauchförmige Tasche 75 von der Oberkante 43 hat, damit auf keinen Fall die Enden des Spriegels 56 aus den Führungsschienen 45a und 45b nach unten herausgezogen werden.

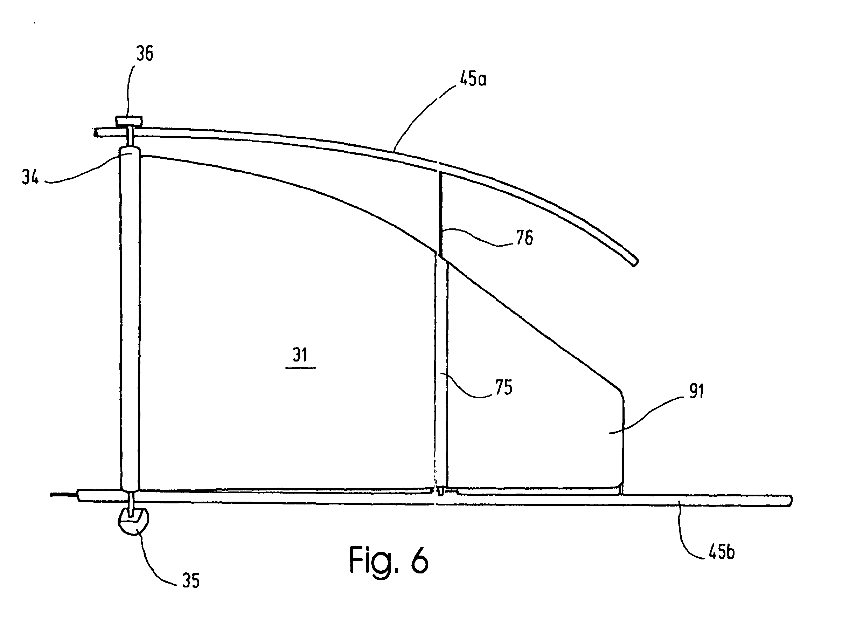

Während bei dem Ausführungsbeispiel nach Fig. 4, wie gezeigt, die Wickelwelle 34 parallel zu der unteren Fensterkante verläuft, zeigt die Fig. 6 ein Ausführungsbeispiel, bei dem die Wickelwelle 34 vertikal ausgerichtet ist und somit parallel zu der B-Säule 3 liegt. Auch hierbei werden wiederum zwei Führungsschienen 45a und 45b verwendet. Die Führungsschiene 45a erstreckt sich parallel zu der unteren Fensterkante 24, während die obere Führungsscheine 45b dem Verlauf der oberen Fensterkante 26 bzw. einem Teil der hinteren Fensterkante 23 folgt. Die Querschnittsgestalt der oberen Führungsschiene 45b ist identisch mit der Querschnittsgestalt der Führungsschiene 45 nach Fig. 3, während die untere Führungsschiene 45a zwei in Längsrichtung durchgehende, hintergriffige Nuten 85 und 86 enthält. Die Nuten 85 und 86 öffnen sich über einen durchgehenden Nutenschlitz 87 bzw. 88 nach oben. Ansonsten besteht zu der Führungsschiene 45a kein Unterschied.

Der Spriegel 76 unterscheidet sich von dem Spriegel 76 gemäß Fig. 5 für das Seitenfensterrollo 30 nach Fig. 4 nur in dem Umstand, dass an Stelle des zylindrischen Führungsschlittens 83 eine Kugel 89 verwendet wird, ähnlich der Kugel 81. Die Aufnahmetasche 75 für den Spriegel 76 liegt wiederum parallel zu der Wickelwelle 34 und befindet sich demzufolge im Abstand zu der Hinterkante 42 der Rollobahn 31. An der Hinterkante 42 der Rollobahn 31 ist eine weitere schlauchförmige Tasche 91 vorhanden, in der ein Spriegel 92 steckt, der als radial wegstehender Arm eines Führungsschlittens 93 ausgebildet ist. Der Führungsschlitten 93 läuft in der Nut 85, während die Kugel 89 durch die Nut 86 gleitet.

Zum Ausfahren der Rollobahn 31 ist lediglich ein Betätigungsglied 56 vorhanden, das in der Nut 85 läuft und mit dem Schlitten 43 zusammenwirkt. Zum Ausfahren der Rollobahn 31 wird der Antriebsmotor in Gang gesetzt und das Betätigungsglied in der Nut 85 in Richtung auf das Fahrzeugheck vorgeschoben. Dabei wird der Schlitten 83 mitgenommen und hierüber die Hinterkante der Rollobahn 31.

Im Ruhezustand ist die Rollobahn 31 auf der Wickelwelle 34 nahezu vollständig aufgewickelt. Auch die Tasche 75 mit dem Spriegel 76 befindet sich in dem aufgewickelten Ballen und lediglich der Schlitten 93 bleibt in seiner Führungsnut 85.

Sobald der Schlitten 93 entsprechend weit vorgeschoben ist und der Spriegel beginnt von der Wickelwelle 34 abzulaufen, wird durch eine nicht gezeigte Einfädeleinrichtung dafür gesorgt, dass die an den beiden Enden des Spriegels 76 sitzenden Kugeln 81 und 89 in die Führungsnuten 86 bzw. 46 eingefädelt werden.

In beiden Fällen sorgt der Spriegel 76 für eine hinreichende Stabilisierung der beiden Kanten der Rollobahn 31, die rechtwinkelig oder schräg zu dem Spriegel 76 sich erstrecken.

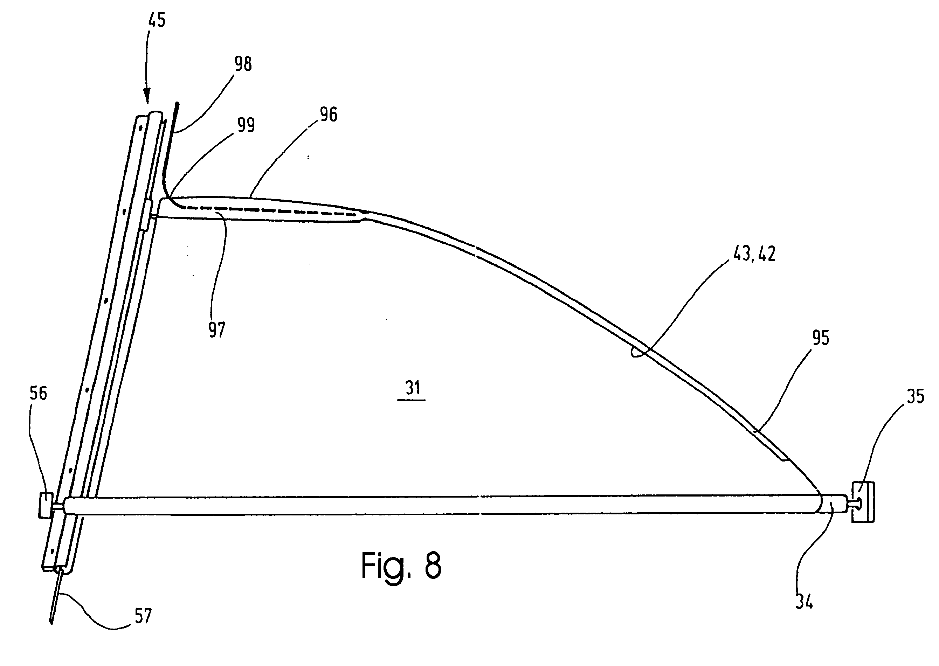

Eine andere Form der Aussteifung der Rollobahnkante ist in Fig. 8 gezeigt. Dieses Ausführungsbeispiel ähnelt dem Ausführungsbeispiel nach Fig. 4 mit der Einschränkung, dass lediglich die Führungsschiene 45a vorhanden ist. Die von der Wickelwelle 34 abliegende Rollobahnkante 41 bzw. 42 ist über eine entsprechende Strecke mit einer schlauchförmigen Tasche 95 versehen, die der Außenkontur folgt. Am linken oberen Ende geht die schlauchförmige Tasche 95 in ein formsteifes Konturteil 96 über, das einen Innenraum 97 enthält, der mit der schlauchförmigen Tasche 95 fluchtet. Zur Stabilisierung der ungeführten Kante der Rollobahn 31, ist ein elastisch biegsamer Kunststoffdraht 98 vorgesehen, der neben der Führungsschiene 45 am oberen Ende des Fensters befestigt ist, und zwar so, dass er aufgrund seiner Einspannung parallel zu der Führungsschiene 45 verlaufen würde. Durch eine Öffnung 99 führt der Kunststoffdraht 98 in das Formstück 97 und von dort weiter in die schlauchförmige Tasche 95.

Bei Aus- und Einfahren der Rollobahn 31 gleitet der Kunststoffdraht über das als Führungsteil dienende Formstück 97 in die Tasche 95 und stabilisiert so im entsprechenden Bereich den Rand. Bei aufgezogenem Seitenfensterrollo 30 liegt ein entsprechender Abschnitt des Kunststoffdrahtes 98 parallel zu der Führungsschiene 45 während ein kurzes Ende nach wie vor in dem Formteil 96 sowie der schlauchförmigen Tasche 95 verbleibt.

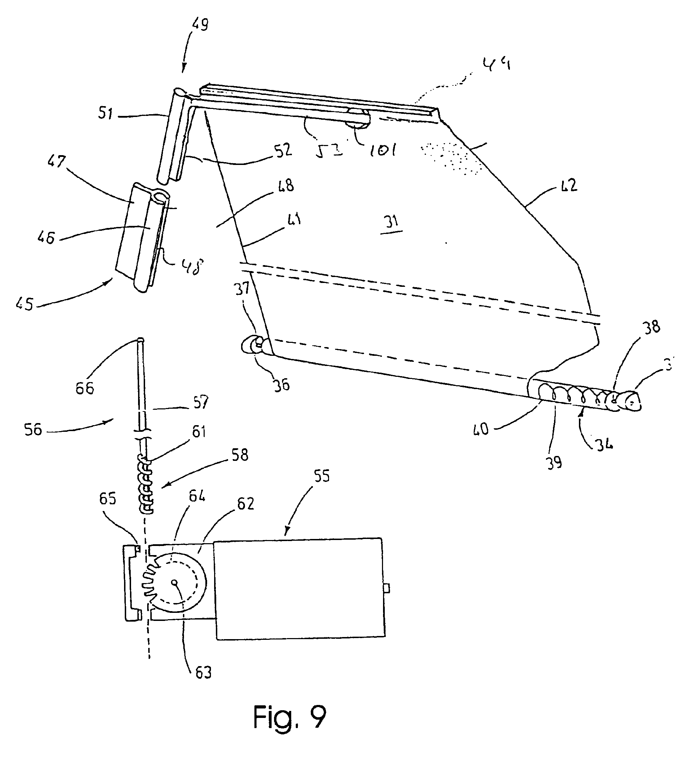

In Fig. 9 ist ein Seitenfensterrollo 30 veranschaulicht, das einen sehr ähnlichen Aufbau hat, wie das Seitenfensterrollo 30 nach Fig. 3. Der wesentliche Unterschied besteht in der Randverstärkungsleiste 44, die von einer nach unten offenen U-förmigen Leiste gebildet ist. In der Leiste 44 läuft eine Rolle 101, die an dem freien Ende des Auslegers 53 drehbar gelagert ist. Mit dieser Anordnung lässt sich nicht nur, wie bei dem Ausführungsbeispiel nach den Fig. 2 bis 3 eine Verschiebung der Randverstärkungsleiste 44 parallel zu dem Ausleger 53 ausgleichen, sondern zusätzlich auch noch eine Winkeländerung.

Eine solche Winkeländerung entsteht, wenn die Führungsschiene 46 wegen des Verlaufs der betreffenden Fensterrahmenkante nicht gerade, sondern gekrümmt verläuft und deswegen der Schlitten 49 in der Führungsschiene 45 dem Ausleger 53 eine Richtung aufzwingt, in der er stellungsabhängig einen Winkel mit der Wickelwelle 34 einschließt, der von Null verschieden ist und sich bei der Bewegung der Rollobahn 31 zu dem ständig ändert.

Die kinematische Umkehr wäre ebenfalls denkbar, insofern, als die Rolle 101 an der Randverstärkungsleiste 44 angebracht wird, während der Ausleger 53 eine nach oben offenes U-förmiges Profil aufweist.

Für welche Kombination von geoffenbarten Merkmalen sich der Konstrukteur entscheidet, steht in seinem Belieben und hängt vor allen Dingen von den zur Verfügung stehenden Randbedingungen, wie Fenstergröße, Fensterproportionen und Fenstergeometrie, Platz in der Seitenverkleidung oder innerhalb der Tür und dergleichen ab. Darüber hinaus versteht sich, dass die gezeigten Seitenfensterrollos keineswegs auf Anwendungen innerhalb einer hinteren Seitentür bei viertürigen PKWs beschränkt ist. Das erfindungsgemäße Seitenfensterrollo läßt sich ohne weiteres auch bei zweitürigen Karosserieformen implementieren, indem es hinter der hinteren Seitenverkleidung der Karosserie bzw. hinter der Verkleidung der B-Säule eingebaut wird. Es ist auch denkbar, das Seitenfensterrollo in die Fahrer- oder die Beifahrertür zu integrieren. Lediglich um die Zahl der Ausführungsbeispiele auf ein vernünftiges Maß zu beschränken, sind ausschließlich Varianten in Verbindung mit einer hinteren Fahrzeugtür für die Fondpassagiere beschrieben.

Ein Seitenfensterrollo für Kraftfahrzeuge weist eine Wickelwelle auf, die vorzugsweise hinter der Seitenverkleidung der Tür oder der B-Säule drehbar gelagert ist. Durch einen Schlitz in der Tür kann eine Rollobahn herausgezogen werden, die das Fenster abdeckt. Zu diesem Zweck greift an der Kante der Rollobahn, die den weitesten Weg zurücklegt, ein Betätigungsglied an. Das Betätigungsglied ist ein linienförmiges Element, das je nach Ausführung entweder zugfest ist oder drucksteif. Die Rollobahn selbst kann neben dem Fenster mit Hilfe wenigstens einer Führungsschiene oder ein oder zwei druck- oder biegesteifen Betätigungsgliedern aufgespannt gehalten werden.

## Patentansprüche

1. Seitenfensterrollo (30) für Kraftfahrzeuge, die wenigstens ein Seitenfenster (18) aufweisen, das von einer unteren etwa horizontal verlaufenden Fensterrahmenkante (24) und wenigstens einer seitlichen etwa senkrecht verlaufenden Fensterrahmenkante (25) begrenzt ist,
mit einer drehbar gelagerten Wickelwelle (34),
mit einer Rollobahn (31), deren Zuschnitt zumindest in einem Abschnitt ihrer Längserstreckung zumindest angenähert der Form des Seitenfensters (18) entspricht und die einen umlaufenden Rollobahnrand aufweist, der einen Abschnitt bildet, der an der Wickelwelle (34) befestigt ist, sowie einen Abschnitt (43), der von der Wickelwelle (34) abliegt,
mit Antriebsmitteln (55) zum kraftbetätigten Ein- und Ausfahren der Rollobahn, wobei zu den Antriebsmitteln (39, 55) Federmittel und ein Getriebemotor (55) gehören, der mit der Wickelwelle (34) gekoppelt ist, **dadurch gekennzeichnet, dass** wenigstens ein Seil mit dem von der Wickelwelle (34) abliegenden Abschnitt (43) des Rollobahnrands verbunden ist, und
dass Federmittel über das Seil mit der Rollobahn (31) verbunden sind und die Rollobahn (31) im Sinne des Abwickelns von der Wickelwelle (34) vorspannen.

2. Seitenfensterrollo nach Anspruch 1, **dadurch gekennzeichnet, dass** das Federmittel (39) eine Druck- oder eine Zugfeder ist.

3. Seitenfensterrollo nach Anspruch 1, **dadurch gekennzeichnet, dass** die Wickelwelle (34) etwa vertikal verlaufend neben dem Fenster (18) angeordnet ist.

4. Seitenfensterrollo nach Anspruch 1, **dadurch gekennzeichnet, dass** die Wickelwelle (34) etwa horizontal verlaufend unterhalb des Fensters (18) angeordnet ist.

5. Seitenfensterrollo nach Anspruch 1, **dadurch gekennzeichnet, dass** der Wickelwelle (34) Mittel zugeordnet sind, die bewirken, dass die Rollobahn (31) auf der Wickelwelle (34) einen kegelstumpfförmigen Wickel bildet.

6. Seitenfensterrollo nach Anspruch 1, **dadurch gekennzeichnet, dass** wenigstens eine Führungsschiene (45) vorgesehen ist.

7. Seitenfensterrollo nach Anspruch 1, **dadurch gekennzeichnet, dass** zwei Führungsschienen (45a,45b) vorgesehen sind, die in wenigstens einem Abschnitt ihrer Länge zumindest angenähert parallel zueinander verlaufen.

8. Seitenfensterrollo nach Anspruch 6, **dadurch gekennzeichnet, dass** die wenigstens eine Führungsschiene (45) horizontal verlaufend angeordnet ist.

9. Seitenfensterrollo nach Anspruch 6, **dadurch gekennzeichnet, dass** die wenigstens eine Führungsschiene (45) parallel zu der unteren Fensterrahmenkante (24) verläuft.

10. Seitenfensterrollo nach Anspruch 6, **dadurch gekennzeichnet, dass** die wenigstens eine Führungsschiene (45) vertikal verlaufend angeordnet ist.

11. Seitenfensterrollo nach Anspruch 6, **dadurch gekennzeichnet, dass** die wenigstens eine Führungsschiene (45) parallel zu der seitlichen Fensterrahmenkante (25) verläuft.

12. Seitenfensterrollo nach Anspruch 1, **dadurch gekennzeichnet, dass** der Rollobahnrand zumindest in einem von der Wickelwelle (34) abliegenden Abschnitt (43) eine Randverstärkung (44,98) aufweist.

13. Seitenfensterrollo nach Anspruch 12, **dadurch gekennzeichnet, dass** die Randverstärkung (98) flexibel ist.

14. Seitenfensterrollo nach Anspruch 12, **dadurch gekennzeichnet, dass** die Randverstärkung (98) zumindest in einer Ebene biegesteif ist, die durch die aufgespannte Rollobahn (31) gebildet ist.

15. Seitenfensterrollo nach Anspruch 12, **dadurch gekennzeichnet, dass** zumindest ein Abschnitt der Randverstärkung (44) als Zugstange dient.

16. Seitenfensterrollo nach Anspruch 1 oder 12, **dadurch gekennzeichnet, dass** die Wickelwelle (34) gegenüber dem unteren Fensterrahmenkante (24) um ein Stück zurückversetzt ist, das der Erstreckung eines Abschnitts der Rollobahn (34) in Wickelrichtung entspricht, vorzugsweise der Projektion eines Abschnitts eines Teils der Randverstärkung (44) auf eine Gerade parallel zu der Wickelrichtung.

17. Seitenfensterrollo nach Anspruch 6, **dadurch gekennzeichnet, dass** die Rollobahn (34) mit wenigstens einem Spriegel (76) versehen ist, der in der wenigstens einen Führungsschiene (45) endseitig geführt ist.

18. Seitenfensterrollo nach Anspruch 17, **dadurch gekennzeichnet, dass** der wenigstens eine Spriegel (76) beidends in Führungsschienen (45a,45b) geführt ist.

19. Seitenfensterrollo nach Anspruch 17 **dadurch gekennzeichnet, dass** der Spriegel (76) teleskopisch längenverstellbar ist.

20. Seitenfensterrollo nach Anspruch 6, **dadurch gekennzeichnet, dass** in der wenigstens einen Führungsschiene (45) ein Schlitten (49) geführt ist, an dem ein Ausleger (53) befestigt ist, mit dem über Verbindungsmittel ein Abschnitt (43) des Rollobahnrands verbunden ist.

21. Seitenfensterrollo nach Anspruch 20, **dadurch gekennzeichnet, dass** die Verbindungsmittel zwei ineinander verschieblichen Schienen umfassen.

22. Seitenfensterrollo nach Anspruch 20, **dadurch gekennzeichnet, dass** die Verbindungsmittel eine Schiene (44) und eine darin geführte und laufende Rolle (101) umfassen.

23. Seitenfensterrollo nach Anspruch 20, **dadurch gekennzeichnet, dass** der Abschnitt (43) der Rollobahnrands mit dem Ausleger (53) längsverschieblich verbunden ist.

## Claims

1. Side window roller blind (30) for motor vehicles having at least one side window (18), which is defined by a lower window frame edge (24) running approximately horizontally and at least one lateral window frame edge (25) running approximately perpendicular,
with a rotatably disposed winding shaft (34),
with a blind sheet (31), the blank of which corresponds, at least in one section of its longitudinal extension, at least approximately to the shape of the side window (18) and which has a circumferential sheet edge, which forms a section fastened to the winding shaft (34) as well as a section (43) remote from the winding shaft (34),
with drive elements (55) for power-driven retraction and extension of the blind sheet, wherein the drive elements (39, 55) include spring elements and a geared motor (55), which is coupled to the winding shaft (34), **characterised in that** at least one rope is connected to the section (43) of the blind sheet edge remote from the winding shaft (34), and spring elements are connected to the blind sheet (31) via the rope and bias the blind sheet (31) in the wind-up direction of the winding shaft (34).

2. Side window roller blind according to Claim 1, **characterised in that** the spring element (39) is a pressure or a tension spring.

3. Side window roller blind according to Claim 1, **characterised in that** the winding shaft (34) is arranged next to the window (18) to run approximately vertically.

4. Side window roller blind according to Claim 1, **characterised in that** the winding shaft (34) is arranged below the window (18) to run approximately horizontally.

5. Side window roller blind according to Claim 1, **characterised in that** the winding shaft (34) has associated means, which cause the blind sheet (31) to form a truncated cone-shaped bundle on the winding shaft (34).

6. Side window roller blind according to Claim 1, **characterised in that** at least one guide rail (45) is provided.

7. Side window roller blind according to Claim 1, **characterised in that** two guide rails (45a, 45b) are provided, which run at least approximately parallel to one another in at least one section of their length.

8. Side window roller blind according to Claim 6, **characterised in that** the at least one guide rail (45) is arranged to run horizontally.

9. Side window roller blind according to Claim 6, **characterised in that** the at least one guide rail (45) runs parallel to the lower window frame edge (24).

10. Side window roller blind according to Claim 6, **characterised in that** the at least one guide rail (45) is arranged to run vertically.

11. Side window roller blind according to Claim 6, **characterised in that** the at least one guide rail (45) runs parallel to the lateral window frame edge (25).

12. Side window roller blind according to Claim 1, **characterised in that** the blind sheet edge has an edge reinforcement (44, 98) at least in a section (43) remote from the winding shaft (34).

13. Side window roller blind according to Claim 12, **characterised in that** the edge reinforcement (98) is flexible.

14. Side window roller blind according to Claim 12, **characterised in that** the edge reinforcement (98) is bend-resistant at least in a plane, which is formed by the opened out blind sheet (31).

15. Side window roller blind according to Claim 12, **characterised in that** at least one section of the edge reinforcement (44) serves as a pull rod.

16. Side window roller blind according to Claim 1 or 12, **characterised in that** the winding shaft (34) is set back in relation to the lower window frame edge (24) by a short distance corresponding to the extension of a section of the blind sheet (34) in winding direction, preferably to the projection of a section of a portion of the edge reinforcement (44) onto a straight line parallel to the winding direction.

17. Side window roller blind according to Claim 6, **characterised in that** the blind sheet (34) is provided with at least one support (76), which is guided at the end in the at least one guide rail (45).

18. Side window roller blind according to Claim 17, **characterised in that** the at least one support (76) is guided at both ends in guide rails (45a, 45b).

19. Side window roller blind according to Claim 17, **characterised in that** the support (76) is telescopically adjustable in length.

20. Side window roller blind according to Claim 6, **characterised in that** a runner (49) is guided in the at least one guide rail (45) and an arm (53) is fastened to said runner, to which arm a section (43) of the roller blind edge is connected via connection means.

21. Side window roller blind according to Claim 20, **characterised in that** the connection means comprise two rails displaceable in one another.

22. Side window roller blind according to Claim 20, **characterised in that** the connection means comprise a rail (44) and a roll (101) running and guided therein.

23. Side window roller blind according to Claim 20, **characterised in that** the section (43) of the roller blind edge is connected to the arm (53) to be longitudinally displaceable.

## Revendications

1. Store à enrouleur (30) pour vitres latérales de véhicules automobiles présentant au moins une fenêtre latérale (18) qui est délimitée en bas par un bord de cadre de fenêtre (24) à peu près horizontal et latéralement par au moins un bord de cadre de fenêtre (25) à peu près vertical, ce store à enrouleur comportant :
- un arbre d'enroulement (34) monté en rotation,
- une bande de store (31) dont la découpe, au moins dans une partie de son étendue longitudinale, correspond au moins à peu près à la forme de la fenêtre latérale (18), et qui présente un bord périphérique formant une partie qui est fixée à l'arbre d'enroulement (34) ainsi qu'une partie (43) qui est éloignée de cet arbre,
- des moyens d'entraînement (39, 55) pour faire rentrer et sortir la bande de store par l'action d'une force, auxquels appartiennent des moyens élastiques et un motoréducteur (55) qui est accouplé à l'arbre d'enroulement (34),
**caractérisé en ce qu'**au moins un câble est relié à la partie (43) du bord de la bande de store qui part de l'arbre d'enroulement (34), et des moyens élastiques sont reliés par le câble à la bande de store (31) en la mettant sous contrainte dans le sens de l'enroulement de l'arbre d'enroulement (34).

2. Store à enrouleur pour vitres latérales selon la revendication 1, **caractérisé en ce que** le moyen élastique (39) est un ressort de compression ou de traction.

3. Store à enrouleur pour vitres latérales selon la revendication 1, **caractérisé en ce que** l'arbre d'enroulement (34) est disposé à peu près verticalement à côté de la fenêtre (18).

4. Store à enrouleur pour vitres latérales selon la revendication 1, **caractérisé en ce que** l'arbre d'enroulement (34) est disposé à peu près horizontalement en dessous de la fenêtre (18).

5. Store à enrouleur pour vitres latérales selon la revendication 1, **caractérisé en ce qu'**à l'arbre d'enroulement (34) sont associés des moyens faisant que la bande de store (31) forme sur l'arbre d'enroulement (34) un enroulement en forme de tronc de cône.

6. Store à enrouleur pour vitres latérales selon la revendication 1, **caractérisé en ce qu'**il est prévu au moins un rail de guidage (45).

7. Store à enrouleur pour vitres latérales selon la revendication 1, **caractérisé en ce qu'**il est prévu deux rails de guidage (45a, 45b) qui au moins sur,une partie de leur longueur sont à peu près parallèles.

8. Store à enrouleur pour vitres latérales selon la revendication 6, **caractérisé en ce que** le rail de guidage (45) au nombre d'un au moins est horizontal.

9. Store à enrouleur pour vitres latérales selon la revendication 6, **caractérisé en ce que** le rail de guidage (45) au nombre d'un au moins est parallèle au bord inférieur de cadre de fenêtre (24).

10. Store à enrouleur pour vitres latérales selon la revendication 6, **caractérisé en ce que** le rail de guidage (45) au nombre d'un au moins est vertical.

11. Store à enrouleur pour vitres latérales selon la revendication 6, **caractérisé en ce que** le rail de guidage (45) au nombre d'un au moins est parallèle au bord latéral de cadre de fenêtre (25).

12. Store à enrouleur pour vitres latérales selon la revendication 1, **caractérisé en ce que** le bord de la bande de store présente dans au moins une partie éloignée de l'arbre d'enroulement (34) un renfort marginal (44, 98).

13. Store à enrouleur pour vitres latérales selon la revendication 12, **caractérisé en ce que** le renfort marginal (98) est flexible.

14. Store à enrouleur pour vitres latérales selon la revendication 12, **caractérisé en ce que** le renfort marginal (98) est rigide en flexion au moins dans le plan formé par la bande de store (31) tendue.

15. Store à enrouleur pour vitres latérales selon la revendication 12, **caractérisé en ce qu'**au moins une partie du renfort marginal (44) sert de tige de traction.

16. Store à enrouleur pour vitres latérales selon la revendication 1 ou 12, **caractérisé en ce que** l'arbre d'enroulement (34) est, par rapport au bord inférieur de cadre de fenêtre (24), reculé d'une petite longueur correspondant à l'étendue d'une partie de la bande de store (34) dans le sens d'enroulement, de préférence à la projection d'une section d'une partie du renfort marginal (44) sur une droite parallèle à la direction d'enroulement.

17. Store à enrouleur pour vitres latérales selon la revendication 6, **caractérisé en ce que** le store à enrouleur (34) est équipé d'au moins un arceau (76) dont l'extrémité est guidée dans le rail de guidage (45) au nombre d'un au moins.

18. Store à enrouleur pour vitres latérales selon la revendication 17, **caractérisé en ce que** la bande de store (34) est équipée d'une baguette (76) qui est guidée à ses deux extrémités dans des rails de guidage (45a, 45b)

19. Store à enrouleur pour vitres latérales selon la revendication 17, **caractérisé en ce que** la baguette (76) a sa longueur réglable télescopiquement.

20. Store à enrouleur pour vitres latérales selon la revendication 6, **caractérisé en ce que** dans le rail de guidage (45) au nombre d'un au moins, se déplace un coulisseau (49) sur lequel est fixé un bras (53) auquel est reliée par l'intermédiaire d'un moyen de liaison, une partie (43) du bord de la bande de store.

21. Store à enrouleur pour vitres latérales selon la revendication 20; **caractérisé en ce que** les moyens de liaison comprennent deux rails coulissant l'un dans l'autre.

22. Store à enrouleur pour vitres latérales selon la revendication 20, **caractérisé en ce que** les moyens de liaison comprennent un rail (44) et un galet (101) guidé et roulant dans celui-ci.

23. Store à enrouleur pour vitres latérales selon la revendication 20, **caractérisé en ce que** la partie (43) du bord de la bande de store est reliée au bras (53) avec coulissement en longueur.
